Europäisches Patentamt

European Patent Office

Office européen des brevets

(11) Veröffentlichungsnummer: **0 519 159 A2**

# EUROPÄISCHE PATENTANMELDUNG

(21) Anmeldenummer: **92103008.6**

(51) Int. Cl.⁵: **C09K 3/14**, C04B 35/10

(22) Anmeldetag: **22.02.92**

(30) Priorität: **25.04.91 DE 4113476**

(43) Veröffentlichungstag der Anmeldung:
**23.12.92 Patentblatt 92/52**

(84) Benannte Vertragsstaaten:
**AT BE CH DE ES FR GB IT LI NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Fliedner, Christine, Dr.**
**Zur Marterkapelle 41**
**W-5300 Bonn 1(DE)**
Erfinder: **Rehfeld, Gerhard, Dr.**
**Bismarckstrasse 87**
**W-5100 Aachen(DE)**
Erfinder: **Maschmeyer, Dietrich, Dr.**
**Ovelheider Weg 170**
**W-4370 Marl(DE)**

(54) **Polykristalline, gesinterte Schleifkörner aus Basis von alpha-A12O3, Verfahren zu ihrer Herstellung und deren Verwendung.**

(57) Die Erfindung betrifft polykristalline, gesinterte Schleifkörner auf Basis von $\alpha$-$Al_2O_3$ mit einer Dichte von > 98 % der theoretischen des Korunds, einer Vickers-Härte von 21 GPa und größer und einer Kristallitgröße von 0,05 bis 1,3 $\mu$m sowie Schleifmittel aus diesen Schleifkörnern und die Verwendung dieser Schleifkörner zur Herstellung keramischer, feuerfester Erzeugnisse.

Die polykristallinen, gesinterten Schleifkörner auf Basis von $\alpha$-$Al_2O_3$ stellt man her, indem zu einer Böhmitdispersion $\alpha$-$Al_2O_3$-Kristallisationskeime zugegeben werden, die Mischung aus der Böhmitdispersion und den Kristallisationskeimen angesäuert und geliert und das Gel getrocknet, zerkleinert und gesintert wird. Hierbei setzt man 0,5 bis 35 Gew.-% $\alpha$-$Al_2O_3$-Kristallisationskeime, bezogen auf die gesinterten Schleifkörner, zu und erhitzt die Mischung aus der Böhmitdisperion und den Kristallisationskeimen unter Rückfluß, wobei der pH-Wert der Mischung in einem Bereich von 2,5 bis 3,5 durch Säurezugabe gehalten wird.

EP 0 519 159 A2

Die Erfindung betrifft polykristalline, gesinterte Schleifkörner auf Basis von $\alpha$-$Al_2O_3$ mit einer Dichte von > 98 % der theoretischen des Korunds, einer Vickers-Härte von 21 GPa und größer und einer Kristallitgröße von 0,05 bis 1,3 $\mu$m sowie Schleifmittel aus diesen Schleifkörnern und die Verwendung dieser Schleifkörner zur Herstellung keramischer, feuerfester Erzeugnisse.

Des weiteren betrifft die Erfindung ein Verfahren zur Herstellung polykristalliner, gesinterter Schleifkörner auf Basis von $\alpha$-$Al_2O_3$, wobei zu einer Böhmitdispersion $\alpha$-$Al_2O_3$-Kristallisationskeime zugegeben werden, die Mischung aus der Böhmitdispersion und den Kristallisationskeimen angesäuert und geliert und das Gel getrocknet, zerkleinert und gesintert wird.

Die Herstellung von polykristallinen, gesinterten Schleifkörnern und Schleifmitteln auf Basis von $\alpha$-Aluminiumoxid mit Hilfe des Sol-Gel-Verfahrens (SG-Verfahren) ist allgemein bekannt und führt in vielen Fällen zu Körpern mit feinkörnigem Kristallgefüge, die darüber hinaus bei niedrigen Temperaturen dicht gesintert werden können.

So können gemäß US-PS 4 314 827 und EP-PS 0 024 099 Böhmitgele durch Zugabe von Metalloxiden, die zu einer Spinellbildung führen, z. B. durch Zugabe von MgO, bei niedrigen Temperaturen dicht gesintert werden. Hierbei wird das Schleifmaterial durch Gelieren einer kolloidalen Dispersion von Aluminiumoxidhydrat und der modifizierenden Komponente in Form eines Metallsalzes, z. B. $Mg(NO_3)_2 \cdot 6H_2O$, und anschließendes Brennen des getrockneten Gels bei Temperaturen von ca. 1 350 °C hergestellt.

In Veröffentlichungen ohne Bezug auf Schleifmittel (M. Kumagai, G. L. Messing, "Enhanced Densification of Boehmit-Sol-Gel by Alpha-Alumina seeding", J. Am. Ceram. Soc. 67, C230-C231, 1984; und "Controlled transformation and sintering of a boehmit sol-gel by Alpha-Alumina seeding", J. Am. Ceram. Soc. 68, 500-505, 1985) wird berichtet, daß bei Zugabe von submikroskopischen $\alpha$-Aluminiumoxid-Kristallisationskeimen zu einer Böhmitdispersion schon durch Sintern bei ca. 1 200 °C Körper mit 98 % der theoretischen Dichte des $\alpha$-$Al_2O_3$ erhalten werden können.

Gemäß der Lehre der EP-OS 0 152 768 und EP-OS 0 324 513 wird sich zudem der kontrollierende Einfluß von $\alpha$-$Al_2O_3$-Kristallisationskeimen auf die resultierende Mikrostruktur zur Beeinflussung der Härte aluminiumoxidhaltiger Schleifmaterialien zunutze gemacht, indem den Böhmitgelen vor dem Trocknen, Kalzinieren und Sintern submikroskopische $\alpha$-$Al_2O_3$-Kristallisationskeime in einer Menge von ≤ 1 Gew.-% zugesetzt werden. Zur Herstellung mehrphasiger Systeme besteht gemäß EP-OS 0 324 513 die Möglichkeit, Zusatzstoffe wie Spinellbildner, z. B. MgO, zusammen mit $\alpha$-$Al_2O_3$-Kristallisationskeimen einzusetzen.

Bei den obengenannten Verfahren gemäß dem Stand der Technik müssen leider zur Entfernung der großen Wassermengen erhebliche Energiemengen aufgewendet werden, da man zur Herstellung möglichst homogener Gele von relativ geringen Feststoffgehalten der Böhmitdispersionen, wie z. B. ca. 11 Gew.-%, ausgeht.

Nur durch den Einsatz aufwendiger, die Gelhomogenität verbessernder Verfahrenstechniken, wie z. B. Druckmischung, Hydrothermalbehandlung und Extrusion gemäß EP-OS 0 168 606, ist es möglich, aus Gelen mit hohem Feststoffgehalt, d. h. mit einem Feststoffgehalt von größer als 25 Gew.-%, aluminiumoxidhaltige Schleifkörner mit einer solchen Härte und Dichte herzustellen, die vergleichbar sind mit Härte und Dichte von Schleifkörnern, erhalten durch das SG-Verfahren, das von geringen Feststoffgehalten ausgeht.

Die Materialien, die mittels des SG-Verfahrens ohne den Einsatz aufwendiger Verfahrenstechniken, ausgehend von höheren Feststoffgehalten von größer als 11 Gew.-% der Dispersionen, erhalten werden, wie z. B. gemäß EP-OS 0 200 487, Beispiele 5 und 6, weisen Werte für die Dichte auf, die unbefriedigend sind und mit 88-90 % deutlich unter der theoretischen Dichte des Korunds liegen, d. h. diese Materialien besitzen eine deutlich geringere Dichte als jene, die durch das SG-Verfahren, ausgehend von geringen Feststoffgehalten, erhalten werden.

Der Erfindung liegt die Aufgabe zugrunde, ein wirtschaftlicheres SG-Verfahren zur Herstellung von Schleifkörnern auf Basis von $\alpha$-$Al_2O_3$ zu entwickeln, wobei auf den Einsatz aufwendiger, spezieller Verfahrenstechniken verzichtet werden soll und das zu besonders dichten und harten Schleifkörnern mit verbesserten schleiftechnischen Eigenschaften führt.

Es wurde nun überraschenderweise gefunden, daß man mit Hilfe eines SG-Verfahrens, bei dem eine Mischung aus einer Böhmitdispersion und 0,5-35 Gew.-% $\alpha$-$Al_2O_3$-Kristallisationskeimen unter Rückfluß erhitzt und der pH-Wert der Mischung in einem Bereich von 2,5 bis 3,5 durch Säurezugabe gehalten wird, zu äußerst dichten und harten Schleifkörnern auf Basis von $\alpha$-$Al_2O_3$ gelangt, die eine Dichte von > 98 % der theoretischen des Korunds und eine Vickers-Härte von 21 GPa und größer aufweisen.

Gegenstand der vorliegenden Erfindung sind daher polykristalline, gesinterte Schleifkörner auf Basis von $\alpha$-$Al_2O_3$ mit einer Dichte von > 98 % der theoretischen des Korunds, einer Vickers-Härte von 21 GPa und größer und einer Kristallitgröße von 0,05 bis 1,3 $\mu$m sowie Schleifmittel aus Schleifkörnern nach Anspruch 1 und die Verwendung der Schleifkörner nach Anspruch 1 zur Herstellung keramischer, feuerfester Erzeugnisse.

Die erfindungsgemäßen polykristallinen, gesinterten Schleifkörner auf Basis von $\alpha$-Aluminiumoxid besitzen gegenüber herkömmlichen $\alpha$-Aluminiumoxid-Schleifmitteln verbesserte schleiftechnische Eigenschaften. Sie zeichnen sich insbesondere durch eine sehr hohe Dichte sowie durch eine äußerst große Härte aus.

Die erfindungsgemäßen Schleifkörner können zur Herstellung von Schleifmitteln auf Unterlage, von gebundenen Schleifkörpern sowie zur Herstellung keramischer, feuerfester Erzeugnisse verwendet werden, aber jedoch auch unverarbeitet oder nach Agglomeration als Strahlmittel oder in flüssiger Form oder in Pastenform für Schleif- oder Polierzwecke eingesetzt werden. Sie können allein oder in Form von Mischungen mit anderen Schleifkörnern, beispielsweise aus Elektrokorund, zu Schleifwerkzeugen verarbeitet werden.

Des weiteren ist Gegenstand der vorliegenden Erfindung ein Verfahren zur Herstellung polykristalliner, gesinterter Schleifkörner auf Basis von $\alpha$-$Al_2O_3$, wobei zu einer Böhmitdispersion $\alpha$-$Al_2O_3$-Kristallisationskeime zugegeben werden, die Mischung aus der Böhmitdispersion und den Kristallisationskeimen angesäuert und geliert und das Gel getrocknet, zerkleinert und gesintert wird, das dadurch gekennzeichnet ist, daß 0,5 bis 35 Gew.-% $\alpha$-$Al_2O_3$-Kristallisationskeime, bezogen auf die gesinterten Schleifkörner, zugegeben werden, die Mischung aus der Böhmitdispersion und den Kristallisationskeimen unter Rückfluß erhitzt wird, wobei der pH-Wert der Mischung in einem Bereich von 2,5 bis 3,5 durch Säurezugabe gehalten wird.

Die Herstellung der Böhmitdispersion erfolgt vorzugsweise entweder durch Aufschlämmen des Böhmitpulvers mit Wasser und anschließende Zugabe eines Peptisierungsagenzes oder durch Zugabe des Böhmitpulvers zu einer wäßrigen Lösung des Peptisierungsagenzes.

Anschließend erfolgt die Zugabe der $\alpha$-$Al_2O_3$-Kristallisationskeime zu der unter Rückfluß erhitzten Böhmitdispersion. Vorzugsweise werden 5 bis 35 Gew.-% $\alpha$-$Al_2O_3$-Kristallisationskeime, bezogen auf die gesinterten Schleifkörner, zugegeben. Die Kristallisationskeime werden vorzugsweise in Form einer Säuredispersion zugegeben. Die Mischung aus der Böhmitdispersion und den Kristallisationskeimen wird vorzugsweise unter Rückfluß auf Temperaturen von 50 bis 95 °C erhitzt. Durch weitere Säurezugabe stellt man den pH-Wert der mit $\alpha$-$Al_2O_3$-Kristallisationskeimen versetzten Böhmitdispersion auf einen Wert im Bereich von 2,5 bis 3,5 ein.

Der Feststoffgehalt der Mischung aus Böhmitdispersion und Kristallisationskeimen kann in weitem Rahmen gewählt werden. Vorzugsweise beträgt der Feststoffgehalt der Mischung aus der Böhmitdispersion und den Kristallisationskeimen 5 bis 50 Gew.-%.

Die Gelation der Mischung aus der Böhmitdispersion und den Kristallisationskeimen kann mit und ohne Zugabe von Gelierhilfsmitteln erfolgen, wobei der pH-Wert laufend auf den o. g. Bereich von 2,5 bis 3,5 nachgestellt wird, bis dieser letztlich nahezu konstant bleibt.

Vorzugsweise wird die Mischung aus der Böhmitdispersion und den Kristallisationskeimen unter Abdampfen von Wasser bzw. des eingesetzten Lösungsmittels geliert.

Mit Hilfe des erfindungsgemäßen Verfahrens wird ein weitaus homogeneres Gel als mit Hilfe der Verfahren nach dem Stand der Technik erzeugt. Hierdurch wird im erfindungsgemäßen Verfahren auch u. a. die Verarbeitung größerer Feststoffgehalte der Mischung aus Böhmitdispersion und Kristallisationskeimen von größer als 11 Gew.-% ermöglicht, und zwar ohne aufwendige Verfahrenstechnik, wo hingegen gemäß den Verfahren nach dem Stand der Technik Feststoffgehalte von größer als 11 Gew.-% nur unter Einsatz sehr aufwendiger Verfahrenstechniken bewältigt werden können. Außerdem kann das erfindungsgemäße Verfahren bezüglich aller Verfahrensparameter leicht und gleichbleibend steuerbar ausgeübt werden.

Das so gewonnene Gel kann entweder zunächst durch Pressen, Gießen und Strangpressen in jede gewünschte Form gebracht und anschließend getrocknet, kalziniert und gesintert werden, oder es kann zur Herstellung von Schleifkörnern zunächst in eine zum Trocknen geeignete Form gebracht, beispielsweise in Tafelform, und mittels konventioneller Entwässerungsmethoden schonend getrocknet werden.

Das getrocknete Gel kann entweder unmittelbar vor oder nach der Kalzination bei einer Zwischenabkühlung mittels jeder konventioneller Zerkleinerungstechnik gebrochen werden. Das vorgesiebte, körnige Trockengel bzw. der getrocknete Gelkörper wird vorzugsweise solange im Temperaturbereich zwischen 400 und 800 °C kalziniert, bis die Entwässerung von Böhmit beendet ist. Das zerkleinerte Produkt bzw. das kalzinierte Korn oder der kalzinierte Körper wird entweder direkt oder nach einer Zwischenabkühlung auf Raumtemperatur gesintert, und zwar solange, bis die Umwandlung zu $\alpha$-$Al_2O_3$ vollständig abgeschlossen ist. Vorzugsweise wird das zerkleinerte Produkt bzw. das kalzinierte Korn oder der kalzinierte Körper bei Temperaturen von 1 100 bis 1 400 °C gesintert. Die gesinterten Schleifkörner können nach dem Abkühlen auf Raumtemperatur nach Form und Normgröße, z. B. durch Sieben, klassiert werden.

Die gesinterten Schleifkörner weisen eine Kristallitgröße von 0,05 bis 1,3 $\mu$m auf, wobei die

Kristallitgröße mit Hilfe der Rasterelektronenmikroskopie bestimmt wird.

Zur Bereitstellung der Böhmitdispersion kann zweckmäßigerweise handelsübliches, gut dispergierbares, hochreines Aluminiumoxidhydrat, z. B. folgender Zusammensetzung - $Al_2O_3$: > 72 Gew.-%, $SiO_2$: < 0,025 Gew.-%, $Fe_2O_3$: < 0,020 Gew.-%, $Na_2O$: < 0,005 Gew.-% -, mit einer großen spezifischen Oberfläche von z. B. > 100 $m^2/g$, vorzugsweise > 150 $m^2/g$, verwendet werden, wie z. B. DISPERAL ALUMINA[R] der Firma Condea Chemie GmbH, Brunsbüttel.

Die Partikelgröße der $\alpha$-$Al_2O_3$-Kristallisationskeime hat keinen signifikanten Einfluß auf die Feinkristallinität und die physikalischen Eigenschaften des gesinterten Produktes. Im erfindungsgemäßen Verfahren werden Kristallisationskeime mit einer mittleren Partikelgröße ($d_{50}$-Wert) von vorzugsweise 0,1 bis 1 $\mu$m, besonders vorzugsweise von 0,22 bis 0,26 $\mu$m, eingesetzt, z. B. Kristallisationskeime TM-DR[R] der Firma Taimai Chemicals Co., Ltd., d. h. die Kristallisationskeime weisen eine mittlere Partikelgröße ($d_{50}$-Wert) von vorzugsweise 0,1 bis 1 $\mu$m, besonders vorzugsweise von 0,22 bis 0,26 $\mu$m, auf.

Das Dispergieren des Böhmits bzw. der Kristallisationskeime und die Sol-Bildung der Mischung aus der Böhmitdispersion und den Kristallisationskeimen kann üblicherweise durch die Zugabe von einprotonigen Säuren, wie z. B. Ameisensäure, Essigsäure, Salzsäure und Salpetersäure, bewirkt werden, wobei Salpetersäure das bevorzugte Peptisierungsagenz ist.

Überraschenderweise erhält man mit Hilfe des erfindungsgemäßen Verfahrens Schleifkörner mit einer Dichte von größer als 98 %, d. h. mit nahezu theoretischer Dichte des Korunds, bei gleichzeitig sehr großer Vickers-Härte von 21 GPa und größer (bei 500 g Last).

Das Zentrifugieren zur Abtrennung evtl. vorhandener, gröberer Partikel aus der Böhmitdispersion bzw. der Dispersion der $\alpha$-$Al_2O_3$-Kristallisationskeime, wie in der US-PS 4 314 827 bzw. EP-PS 0 024 099 als technisch notwendig beschrieben, ist zur Erzeugung der erfindungsgemäßen Schleifkörner nicht notwendig, wenn nach dem erfindungsgemäßen Verfahren gearbeitet wird.

Die Erfindung wird durch die folgenden Beispiele näher erläutert:

Vergleichsbeispiel 1 (gemäß EP-OS 0 168 606, Beispiel 2)

40 Pfund Aluminiumoxidhydrat-Pulver CONDEA PURAL SB[R] werden mit 11 Pfund Wasser, welches 2,266 Gew.-% $\alpha$-$Al_2O_3$-Kristallisationskeime enthält, die durch Mühlenabrieb beim Mahlen des Wassers mit $Al_2O_3$-Mahlkörpern im Wasser dispergiert werden, und mit weiteren 14 Pfund Leitungswasser in einem Misch-Tellerreiber miteinander vermischt. Zu dieser Mischung wird innerhalb 2 Minuten eine Lösung von 1 600 ml konzentrierter Salpetersäure in 1 600 ml Leitungswasser gegeben. Anschließend werden 6 Pfund Leitungswasser hinzugefügt. Die Mischung wird weitere 2 Minuten gemischt und anschließend stranggepreßt. Hierbei extrudiert man die Mischung mit einem Druck von 500 bis 1 000 Pfund pro inch durch Löcher mit 1/8 Zoll Durchmesser. Das so erhaltene Material besitzt nach 5minütigem Sintern bei 1 400 °C eine Härte von 19,5 bis 20 GPa und eine Dichte von 97 % d. th. des Korunds.

Der bevorzugte Gehalt an $\alpha$-$Al_2O_3$-Kristallisationskeimen liegt gemäß der Lehre der EP-OS 0 168 606 bei ca. 1 Gew.-%, bezogen auf den Feststoffanteil der Gesamtmischung, da ein Gehalt an $\alpha$-$Al_2O_3$-Kristallisationskeimen von größer als 5 Gew.-% zu vermehrtem Kornwachstum im gesinterten Produkt führt und dessen Härte vermindert (siehe EP-OS 0 168 606, Beispiel 2, Zeilen 19-22).

Beispiel 1

1 212 g Aluminiumoxidhydrat DISPERAL[R] werden mit 4 552 g vollentsalztem Wasser in einem Behälter unter Rühren homogen dispergiert und unter Rückfluß auf 80 °C erhitzt. In der Zwischenzeit wird eine Dispersion aus 102 g $\alpha$-$Al_2O_3$-Kristallisationskeimen TM-DR[R] in 700 g vollentsalztem Wasser unter Zusatz von 11 g 65 Gew.-%iger Salpetersäure unter Rühren hergestellt, die ebenfalls auf 80 °C unter Rückfluß erhitzt wird.

Zur auf 80 °C unter Rückfluß erhitzten Böhmitdispersion wird die ebenfalls noch heiße Dispersion von $\alpha$-$Al_2O_3$-Kristallisationskeimen zugegeben. Anschließend erfolgt die Einstellung des pH-Wertes der Mischung aus der Böhmitdispersion und den Kristallisationskeimen auf einen Wert von 2,7, indem man mit 65 Gew.-%iger Salpetersäure titriert. Der Feststoffgehalt der Mischung aus Böhmitdispersion und $\alpha$-$Al_2O_3$-Kristallisationskeimen beträgt 20 Gew.-%.

Nach ca. 20 Stunden läßt man die Mischung gelieren, indem man das Wasser verdampft, wobei der pH-Wert laufend auf o. g. Wert nachgestellt wird, bis dieser letztlich konstant bleibt. Bei Erreichen der gewünschten Viskosität wird die Reaktion abgebrochen, das Produkt in Abdampfschalen mit einer Höhe von 2 bis 3 cm ausgegossen und abgedeckt in einem befeuchteten Trockenschrank bei 80 °C getrocknet.

Das Trockengel wird mit einem Backenbrecher gebrochen und vorgesiebt. Nach der Kalzination bei 400 °C werden die Körner zum Sintern auf eine Temperatur von 1 300 °C in einem Ofen erhitzt. Die Verweildauer beträgt 55 Minuten und der Gehalt an Kristallisationskeimen, bezogen auf das Sinterprodukt, 10 Gew.-%.

Die Dichte der erzeugten Schleifkörner beträgt 3,91 g/cm$^3$, d. h. 98,5 % der theoretischen des Korunds und die Vickers-Härte (bei 500 g Last) 22,1 GPa.

### Beispiel 2

Beispiel 1 wird wiederholt, wobei der Gehalt an Kristallisationskeimen, bezogen auf das Sinterprodukt, wie im Beispiel 1 ebenfalls 10 Gew.-% beträgt, lediglich der Feststoffgehalt der Mischung aus der Böhmitdispersion und den $\alpha$-Al$_2$O$_3$-Kristallisationskeimen liegt bei 40 Gew.-%. Die Dichte der erzeugten Schleifkörner beträgt 3,92 g/cm$^3$, d. h. 98,7 % der theoretischen des Korunds und die Vickers-Härte (bei 500 g Last) 21,5 GPa.

### Beispiel 3

389 g Aluminiumoxidhydrat DISPERAL$^R$ werden mit 1 130 g vollentsalztem Wasser in einem Behälter unter Rühren homogen dispergiert und unter Rückfluß auf 80 °C erhitzt. In der Zwischenzeit wird eine Dispersion aus 127 g $\alpha$-Al$_2$O$_3$-Kristallisationskeimen TM-DR$^R$ in 822 g vollentsalztem Wasser unter Zusatz von 16,5 g 65 Gew.-%iger Salpetersäure unter Rühren hergestellt, die ebenfalls auf 80 °C unter Rückfluß erhitzt wird.

Zur auf 80 °C unter Rückfluß erhitzten Böhmitdispersion wird die ebenfalls noch heiße Dispersion von $\alpha$-Al$_2$O$_3$-Kristallisationskeimen zugegeben. Anschließend erfolgt die Einstellung des pH-Wertes der Mischung aus der Böhmitdispersion und den Kristallisationskeimen auf einen Wert von 2,7, indem man mit 65 Gew.-%iger Salpetersäure titriert. Der Feststoffgehalt der Mischung aus Böhmitdispersion und $\alpha$-Al$_2$O$_3$-Kristallisationskeimen beträgt 21 Gew.-%, und der Gehalt an Kristallisationskeimen, bezogen auf das Sinterprodukt, 30 Gew.-%. Die weitere Aufarbeitung erfolgt analog zu Beispiel 1.

Die Dichte der bei 1 300 °C mit einer Verweildauer von 90 Minuten gesinterten Schleifkörner beträgt 3,94 g/cm$^3$, d. h. 99,2 % der theoretischen des Korunds und die Vickers-Härte (bei 500 g Last) 22,0 GPa.

### Patentansprüche

1. Polykristalline, gesinterte Schleifkörner auf Basis von $\alpha$-Al$_2$O$_3$ mit einer Dichte von > 98 % der theoretischen des Korunds, einer Vickers-Härte von 21 GPa und größer und einer Kristallitgröße von 0,05 bis 1,3 $\mu$m.

2. Schleifmittel aus Schleifkörnern nach Anspruch 1.

3. Verfahren zur Herstellung polykristalliner, gesinterter Schleifkörner auf Basis von $\alpha$-Al$_2$O$_3$, wobei zu einer Böhmitdispersion $\alpha$-Al$_2$O$_3$-Kristallisationskeime zugegeben werden, die Mischung aus der Böhmitdispersion und den Kristallisationskeimen angesäuert und geliert und das Gel getrocknet, zerkleinert und gesintert wird,
dadurch gekennzeichnet,
daß 0,5 bis 35 Gew.-% $\alpha$-Al$_2$O$_3$-Kristallisationskeime, bezogen auf die gesinterten Schleifkörner, zugegeben werden, die Mischung aus der Böhmitdispersion und den Kristallisationskeimen unter Rückfluß erhitzt wird, wobei der pH-Wert der Mischung in einem Bereich von 2,5 bis 3,5 durch Säurezugabe gehalten wird.

4. Verfahren nach Anspruch 3,
dadurch gekennzeichnet,
daß die Kristallisationskeime eine mittlere Partikelgröße (d$_{50}$-Wert) von 0,1 bis 1 $\mu$m aufweisen.

5. Verfahren nach Anspruch 4,
dadurch gekennzeichnet,
daß die Kristallisationskeime eine mittlere Partikelgröße (d$_{50}$-Wert) von 0,22 bis 0,26 $\mu$m aufweisen.

6. Verfahren nach den Ansprüchen 3 bis 5,
dadurch gekennzeichnet,
daß die Kristallisationskeime in Form einer Säuredispersion zugegeben werden.

7. Verfahren nach den Ansprüchen 3 bis 6,
dadurch gekennzeichnet,
daß die Mischung aus der Böhmitdispersion und den Kristallisationskeimen unter Rückfluß auf Temperaturen von 50 bis 95 °C erhitzt wird.

8. Verfahren nach den Ansprüchen 3 bis 7,
dadurch gekennzeichnet,
daß die Mischung aus der Böhmitdispersion und den Kristallisationskeimen unter Abdampfen von Wasser geliert wird.

9. Verfahren nach den Ansprüchen 3 bis 8,
dadurch gekennzeichnet,
daß der Feststoffgehalt der Mischung aus der Böhmitdispersion und den Kristallisationskeimen 5 bis 50 Gew.-% beträgt.

10. Verfahren nach den Ansprüchen 3 bis 9,
dadurch gekennzeichnet,

daß das zerkleinerte Produkt bei Temperaturen von 1 100 bis 1 400 ° C gesintert wird.

11. Verfahren nach den Ansprüchen 3 bis 10,
dadurch gekennzeichnet,
daß 5 bis 35 Gew.-% $\alpha$-$Al_2O_3$-Kristallisationskeime, bezogen auf die gesinterten Schleifkörner, zugegeben werden.

12. Verwendung der polykristallinen, gesinterten Schleifkörner auf Basis von $\alpha$-$Al_2O_3$ nach Anspruch 1 zur Herstellung keramischer, feuerfester Erzeugnisse.